# EUROPÄISCHE PATENTSCHRIFT

(11) **EP 0 521 379 B1**
(45) Veröffentlichungstag und Bekanntmachung des Hinweises auf die Patenterteilung: **20.04.1994**
(21) Anmeldenummer: 92110634.0
(22) Anmeldetag: 24.06.1992
(51) Int. Cl.: F02K 3/072, F02K 3/06, F02C 3/067

(54) **Propfantriebwerk mit gegenläufigem Niederdruckverdichter (Booster)**
Prop-fan engine with counterrotating low pressure compressor
Propfan avec compresseur contrarotative à basse pression

(30) Priorität: 03.07.1991 DE 4122008
(43) Veröffentlichungstag der Anmeldung: 07.01.1993
(73) Patentinhaber: MTU MOTOREN- UND TURBINEN-UNION MÜNCHEN GMBH, D-80976 München (DE)
(72) Erfinder: Rohra, Alois, W-8000 München 90 (DE); Geidel, Helmut Arnd, W-8047 Karlsfeld (DE)

(56) Entgegenhaltungen:
- EP-A- 0 337 272
- GB-A- 2 194 292

## Beschreibung

Die Erfindung betrifft ein Propfantriebwerk mit zwei entgegengesetzt drehenden Fanrotoren, einer Gasturbine, deren Niederdruckturbine zwei gegenläufige Turbinenrotoren aufweist, die die Fanrotoren über zwei koaxiale Turbinenwellen antreiben, und mit einem mehrstufigen Niederdruckverdichter (Booster), der gegenläufige konzentrische Boosterrotoren aufweist.

Bisher bekannte Lösungen zweistufiger, gegenläufiger Fantriebwerke insbesondere Propfantriebwerke, sind entweder mit Getrieben ausgeführt, die die gesamte von der Niederdruckturbine abgegebene Leistung übertragen und die Leistungsverteilung an die Fanrotoren vornehmen oder jede der beiden Fanstufen wird von einer separaten Welle angetrieben.

Die Verwendung eines Niederdruckverdichters (Booster) zur Schubsteigerung, welcher stromaufwärts der Gasturbine im Primärkreis angeordnet ist, ist bei Getriebelösungen insofern unproblematisch, als dieser ohne weiteres auf der Niederdruckturbinenwelle angebracht werden kann. Das Getriebe selbst, das meist als Differentialgetriebe ausgeführt wird, d.h. der Antrieb der hinteren Fanstufe erfolgt über das Hohlrad und der vorderen über den Planetenträger, stellt jedoch eine große technische Herausforderung dar. Zudem erfordert diese Getriebeart hohe Niederdruckturbinendrehzahlen, da das Übersetzungsverhältnis solcher Getriebe nicht wesentlich unter i = 4,0 bis 4,5 ausgeführt werden kann. Je nach Größe des Fandurchmessers führt das zu Drehzahlen von über 8.000 Umdrehungen pro Minute für die Niederdruckturbine, deren Machbarkeit zwar aerodynamisch möglich, mechanisch aber problematisch erscheint.

Neben der Verwendung eines Getriebes ist der direkte Antrieb der beiden Fanstufen über zwei Wellen eine weitere Lösungsmöglichkeit. Diese setzt eine mehrrotorige Niederdruckturbine voraus, deren Rotoren entweder hintereinander oder gegenläufig ineinander angeordnet sind. Die hintereinander angeordnete Turbine baut hierbei sehr lang.

Die kompakteste Ausführung stellt die gegenläufige, ineinander angeordnete Niederdruckturbine dar, wie in der DE-A-38 12 027 A1 offenbart. Der Antrieb des zwischen den Fanrotoren und der Gasturbine angeordneten Niederdruckverdichters erfolgt hierbei von einer Fanrotorwelle über ein Getriebe. Die Wellen werden daher unterschiedlich stark belastet. Darüber hinaus führt das zusätzliche Getriebe zu einer Gewichtserhöhung und benötigt zusätzlichen Wartungsaufwand.

In der DE-A-37 28 436 A1 hingegen wird ein getriebeloser gegenläufiger Niederdruckverdichter offenbart, welcher zwischen den beiden Fanrotoren angeordnet ist. Auf den erhöhten Schutz des zweiten Rotors gegen Fremdkörpereinwirkung, wie Vogelschlag, wird bei dieser Anordnung verzichtet, da der Lufteinlauf des Kerntriebwerkes vor dem hinteren Fanrotor angeordnet sein muß. Als weiter nachteilig wirkt das zwangsläufig größere Nebenverhältnis des hinteren Fanrotors aus.

Hiervon ausgehend besteht die Aufgabe der Erfindung darin, ein gattungsgemäßes Propfantriebwerk anzugeben, dessen gegenläufiger Zusatzverdichter ohne Verwendung eines Getriebes von der Niederdruckturbine angetrieben wird und das Nabenverhältnis der Fanrotoren nicht nachteilig beeinflußt. Ein maximaler Schutz des Primärkreises vor Fremdkörpereinwirkung ist zu gewährleisten.

Erfindungsgemäß wird die Aufgabe dadurch gelöst, daß der Niederdruckverdichter koaxial zwischen den Fanrotoren und der Gasturbine angeordnet ist, wobei ein radial innerer Boosterrotor mit der radial inneren Turbinenwelle verbunden ist und ein radial äußerer Boosterrotor fanrotorseitig über die Schaufelreihe der ersten Boosterstufe mit dem bezogen auf die Strömungsrichtung zweiten Fanrotor und gasturbinenseitig über die Schaufelreihe der letzten Boosterstufe mit der radial äußeren Niederdruckturbinenwelle verbunden ist und der Lufteinlauf der Gasturbine stromabwärts der Fanrotoren angeordnet ist.

Die erfindungsgemäße Anordnung hat den Vorteil, durch Anordnung der gegenläufigen Boosterrotoren in den Antriebsstrang zwischen den Fanrotoren einerseits und der Gasturbine andererseits, bei kurzer Baulänge des Boosters die antreibenden Turbinenwellen gleichmäßig zu belasten. Ein optimaler Schutz vor Fremdkörpereinwirkung auf das Kerntriebwerk und auf den Booster ist dadurch gegeben, daß beide Fanrotoren stromaufwärts des Lufteinlaufes zum Primärkreis angeordnet sind und daher angesaugte Fremdkörper von zwei Fanrotoren vom Einlauf abgelenkt werden. Zudem kann das Nabenverhältnis im Bereich der Fanrotoren klein gehalten werden, da der Booster stromabwärts des hinteren Fanrotors angeordnet ist. Hierdurch reduziert sich der notwendige Triebwerksdurchmesser entsprechend.

Ein hohes Druckverhältnis bei kompakter Größe des Boosters wird durch die bevorzugte Ausführung gemäß Anspruch 2 ermöglicht, da die Gegenläufigkeit der Boosterrotoren hohe Druckverhältnisse auch bei niedriger Drehzahl gewährleisten.

Eine bevorzugte Ausführungsform der Erfindung wird nachfolgend unter Bezugnahme auf die beigefügte Zeichnung erläutert. Es zeigt:
- Fig. 1: eine teilgeschnittene Ansicht eines Propfantriebwerkes
und
- Fig. 2: einen Ausschnitt eines Propfantriebwerkes mit zwei Fanrotoren und Booster.

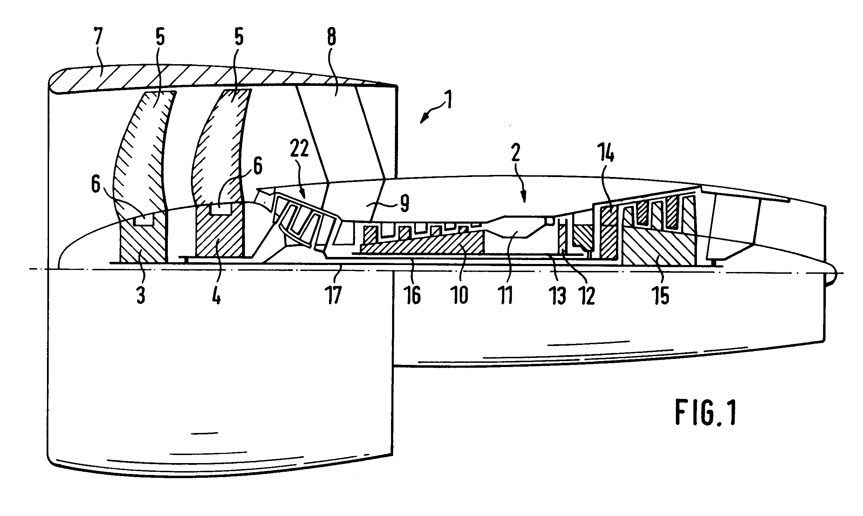

Das in Fig. 1 gezeichnete Propfantriebwerk 1 besteht aus einer Gasturbine 2 und zwei stromauf angeordneten Fanrotoren 3 und 4, an welchen über dem Umfang verteilte Fanschaufeln 5 angebracht sind. Die Fanschaufeln 5 sind über nicht näher dargestellte Verstellvorrichtungen 6 verschwenkbar gelagert. Radial außerhalb der Fanschaufeln 5 ist ein Mantel 7 vorgesehen, der sich in triebwerksaxialer Richtung erstreckt. Über eine Anzahl regelmäßig beabstandeter Rippen 8 ist der Mantel 7 am Triebwerksgehäuse 9 der Gasturbine 2 angebracht.

Die Gasturbine 2 besteht im wesentlichen aus einem Hochdruckverdichter 10, einer Brennkammer 11 und einer Hochdruckturbine 12, welche über die Hochdruckturbinenwelle 13 den Hochdruckverdichter 10 antreibt. Stromab der Hochdruckturbine 12, ist eine Arbeitsturbine mit zwei gegenläufige Turbinenrotoren 14 und 15 angeordnet, die über zwei zueinander koaxiale Turbinenwellen 16 und 17, welche radial innerhalb der Hochdruckturbinenwelle 13 in Triebwerkslängsrichtung verlaufen, die Fanrotoren 4 bzw. 3 sowie die Boosterrotoren 18 bzw. 19 antreiben. Hierzu sind die Turbinenschaufelreihen der Turbinenrotoren 14 bzw. 15 rotorweise abwechselnd hintereinander angeordnet.

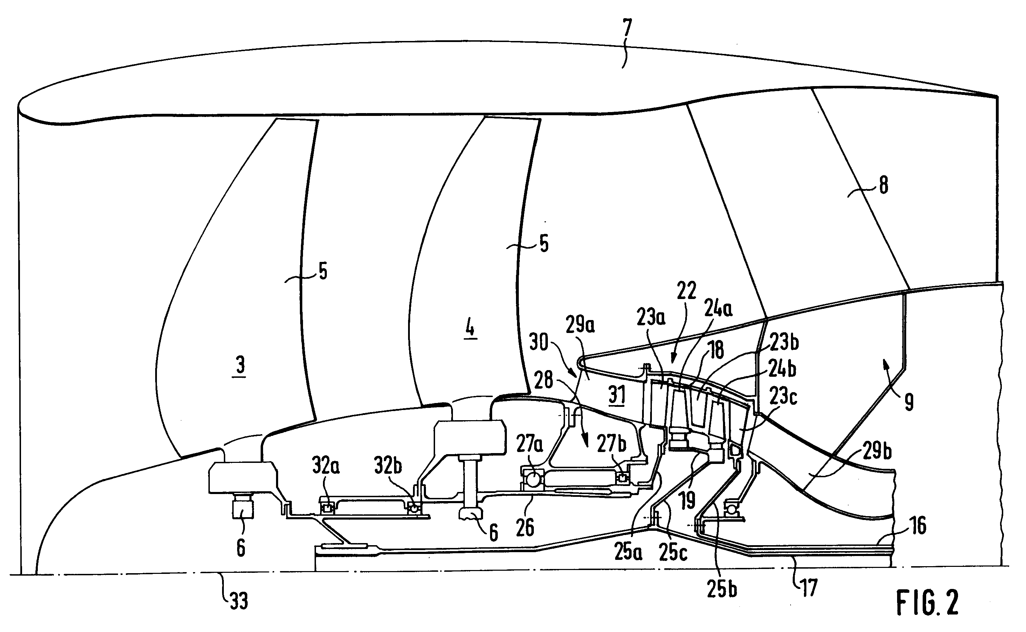

Wie in Fig. 2 gezeigt, ist der axial zwischen dem hinteren Fanrotor 4 und der Gasturbine 2 angeordnete fünfstufige Niederdruckverdichter (Booster) 22 in gegenläufiger zweirotoriger Bauweise ausgeführt. Die beiden Boosterrotoren 18 und 19 sind konzentrisch zueinander angeordnet, wobei ihre Schaufelreihen rotorweise abwechselnd hintereinander angeordnet sind. Der radial äußere Boosterrotor 18 weist drei Schaufelreihen 23a, b und c auf, deren Schaufeln radial außen am Boosterrotor befestigt sind und sich radial nach innen bis zum inneren Boosterrotor 19 erstrecken. Die beiden Schaufelreihen 24a und b des inneren Boosterrotors 19 hingegen erstrecken sich radial nach außen bis zum äußeren Boosterrotor 18. Der Primärkanal 31 im Bereich des Boosters 22 ist daher durch die Boosterrotoren 18 und 19 radial begrenzt.

Zur Leistungsübertragung von den Turbinenrotoren 14 und 15 auf die Boosterrotoren 18 bzw. 19 und Fanrotoren 4 bzw. 3, ist die radial äußere Turbinenwelle 16 über einen Zwischenkonus 25b mit der letzten Schaufelreihe 23c verbunden und der bezüglich der Strömungsrichtung hintere Fanrotor 4 über eine Zwischenwelle 26 und einem vorderen Zwischenkonus 25a mit der ersten Schaufelreihe 23a verbunden. Der radial äußere Boosterrotor 18 mit seiner bezüglich der Strömungsrichtung ersten und letzten Schaufelreihe 23a bzw. 23c ist somit Drehmoment übertragend ausgeführt. Der vordere Fanrotor 3 wird direkt über die radial innere Turbinenwelle 17 angetrieben. Ein Zwischenkonus 25c schafft eine Verbindung zum Antrieb des inneren Boosterrotors 19.

Zur Übertragung der Fanrotor-Lasten auf das Triebwerksgehäuse 9 ist die Zwischenwelle 26 zwischen dem hinteren Fanrotor 4 und dem äußeren Boosterrotor 18 mittels eines Fest- 27a und eines Loslagers 27b am Zwischengehäuse 28 gelagert, welches über Streben 29a mit dem Triebwerksgehäuse 9 unter Umgehung des Boosters 22 verbunden ist. Die Streben 29 durchdringen hierzu den Lufteinlauf 30 des Primärkanals 31 stromaufwärts des Boosters 22. Der Lufteinlauf 30 selbst ist bezüglich der Strömungsrichtung zwischen dem hinteren Fanrotor 4 und dem Booster 22 angeordnet.

Der vordere Fanrotor 3 ist über Zwischenlager 32a und 32b an der Zwischenwelle 26, die sich in Triebwerkslängsrichtung bis zum ersten Fanrotor 3 hin erstreckt, gelagert.

Zur Einleitung der Booster-Lasten in das Triebwerksgehäuse 9 ist der äußere Boosterrotor 18 über die boosterseitigen Lager 27a und 27b am Zwischengehäuse 28 einerseits und andererseits im Bereich der Befestigungsstelle des hinteren Zwischenkonuses 25b an der äußeren Turbinenwelle 16 am Triebwerksgehäuse 9 über Streben 29b gelagert.

## Patentansprüche

1. Propfantriebwerk mit zwei entgegengesetzt drehenden Fanrotoren (3,4), einer Gasturbine (2), deren Niederdruckturbine zwei gegenläufige Turbinenrotoren aufweist, die die Fanrotoren über zwei koaxiale Turbinenwellen (16, 17) antreiben, und mit einem mehrstufigen Niederdruckverdichter (22) (Booster), der gegenläufige konzentrische Boosterrotoren aufweist, wobei ein radial innerer Boosterrotor (19) mit der radial inneren Turbinenwelle (17) verbunden ist dadurch gekennzeichnet, daß der Niederdruckverdichter (22) koaxial zwischen den Fanrotoren (14,15) und der Gasturbine (2) angeordnet ist, und ein radial äußerer Boosterrotor (18) fanrotorseitig über die Schaufelreihe (23a) der ersten Boosterstufe mit dem bezogen auf die Strömungsrichtung zweiten Fanrotor (4) und gasturbinenseitig über die Schaufelreihe (23c) der letzten Boosterstufe mit der radial äußeren Turbinenwelle (16) verbunden ist und der Lufteinlauf (30) des Niederdruckverdichters (22) stromabwärts der Fanrotoren (3, 4) angeordnet ist.

2. Propfantriebwerk nach Anspruch 1, dadurch gekennzeichnet, daß die Schaufelreihen des Niederdruckverdichters (22) rotorweise abwechselnd hintereinander angeordnet sind und die Schaufeln des radial äußeren Boosterrotors (18) sich radial nach innen erstrecken und die des radial inneren Boosterrotors (19) radial nach außen erstrecken.

## Claims

1. A prop-fan engine with two fan rotors (3, 4) rotating in opposite directions, a gas turbine (2), the low-pressure turbine of which has two contra-rotating turbine rotors driving the fan rotors by way of two coaxial turbine shafts (16, 17), and with a multiple-stage low-pressure compressor (22) (booster) comprising contra-rotating concentric booster rotors, wherein a radially inner booster rotor (19) is connected to the radially inner turbine shaft (17), **characterized in that** the low-pressure compressor (22) is arranged coaxially between the fan rotors (14, 15) and the gas turbine (2), and a radially outer booster rotor (18) is connected on the fan-rotor side by way of the row of blades (23a) of the first booster stage to the second fan rotor (4) with respect to the direction of flow and on the gas-turbine side by way of the row of blades (23c) of the last booster stage to the radially outer turbine shaft (16), and the air inlet (30) of the low-pressure compressor (22) is arranged downstream of the fan rotors (3, 4).

2. A prop-fan engine according to Claim 1, **characterized in that** the rows of blades of the low-pressure compressor (22) are arranged alternately one behind the other with respect to the rotors, and the blades of the radially outer booster rotor (18) extend radially inwards and those of the radially inner booster rotor (19) extend radially outwards.

## Revendications

1. Réacteur double-flux à soufflante du type propfan, comportant deux rotors de soufflante (3, 4) tournant en sens inverse, une turbine à gaz (2) dont la turbine basse pression présente deux rotors de turbine contrarotatifs, qui entraînent les rotors de soufflante par l'intermédiaire de deux arbres de turbine (16, 17) coaxiaux, et comportant égalemen; un compresseur basse pression (22) à plusieurs étages (booster), qui présente des rotors de booster concentriques et contrarotatifs, un rotor de booster (19) radialement intérieur étant relié à l'arbre de turbine (17) radialement intérieur, caractérisé en ce que le compresseur basse pression (22) est disposé coaxialement entre les rotors de soufflante (3, 4) et la turbine à gaz (2), en ce qu'un rotor de booster (18) radialement extérieur est relié, côté rotor de soufflante, par l'intermédiaire de la rangée d'aubes (23a) du premier étage de booster, au second rotor de soufflante (4) en se référant au sens de l'écoulement, et côté turbine à gaz, à l'arbre de turbine (16) radialement extérieur, par l'intermédiaire de la rangée d'aubes (23c) du dernier étage de booster, et en ce que l'entrée d'air (30) du compresseur basse pression (22) est disposée en aval des rotors de soufflante (3, 4).

2. Réacteur double-flux à soufflante du type propfan, selon la revendication 1, caractérisé en ce que les rangées d'aubes du compresseur basse pression (22) sont disposées les unes à la suite des autres en étant alternées par rotor, et en ce que les aubes du rotor de booster (18) radialement extérieur s'étendent radialement vers l'intérieur, et celles du rotor de booster (19) radialement intérieur, s'étendent radialement vers l'extérieur.
